# EUROPÄISCHE PATENTANMELDUNG

(11) **EP 0 615 246 A1**
(43) Veröffentlichungstag der Anmeldung: **14.09.1994**
(21) Anmeldenummer: 94102844.1
(22) Anmeldetag: 25.02.1994
(51) Int. Cl.: G11B 33/04

(54) **Vorrichtung zur Ablage von Compact Discs und dergl.**

(30) Priorität: 08.03.1993 CH 684/93
(71) Anmelder: Bearth, Urs, CH-8048 Zürich (CH)
(72) Erfinder: Bearth, Urs, CH-8048 Zürich (CH)
(74) Vertreter: OK pat AG

(57) **Zusammenfassung**

Beschrieben ist eine Ablage-Vorrichtung (**1**) für Compact Disc (**3**), die in acrylglasartigen, karteikastenförmigen Hüllen (**2**) verpackt sind. Dabei lassen sich diese Hüllen (**2**) in Halteelemente (**4**), die aus einem Rahmen (**5**) und einem inneren Einschub (**6**) bestehen, einstecken und die Halteelemente (**4**) selbst können via Schwenkzapfen (**11**) im Hohlraum (**14**) eines ortsfesten T-förmigen Profils (**13**) verschoben werden.

## Beschreibung

Compact Discs sind in aller Regel in illustrativen acrylglasartigen Hüllen untergebracht, einerseits um die eigentlichen Tonträger, die Discs, beim Transport und bei der Aufbewahrung vor mechanischen Beschädigungen zu bewahren und andererseits um dem Benutzer durch auffällige Illustrationen schnell und einfach einen Hinweis auf die aufgezeichneten Dokumente zu geben.

Die Illustrationen und gegebenenfalls Auflistungen der einzelnen abgespeicherten Titel, Interpreten sowie Informationen über die Zeitdauer der einzelnen Titel, beschränken sich bei den Informationen auf den erwähnten Hüllen hauptsächlich auf die entsprechenden Grund- und Deckflächen der Hüllen. An den jeweiligen schmalen Seitenflächen sind gegebenenfalls generelle Hinweise auf die aufgezeichneten Titel, bzw. Produktionsnummern des Herstellers, zu finden.

Es sind nun Vorrichtungen bekannt, bei denen turmartige Metall-, Holz- oder Kunststoff-Gestelle Ausnehmungen aufweisen, in welche die Compact Discs mitsamt ihrer Hüllen horizontal im Abstand übereinander schubladenförmig einsteckbar sind, sodass eine vorbestimmte Anzahl von Discs in solchen Vorrichtungen stapelbar sind. Nachteilig bei solchen Vorrichtungen ist, dass die Standfestigkeit derartiger turmartigen Metallgestelle von der Abstützung gegen die Bodenfläche abhängig ist, sodass eine Sicherheit, beispielsweise im privaten Wohnbereich, gegen mutwilliges oder unbeabsichtigtes Umwerfen eines solchen Metallgestelles durch Kleinkinder, nicht gegeben ist, beziehungsweise nur dann hergestellt werden kann, wenn unproportional grosse Bodenabstützungen gewählt werden, die vom Design nicht mehr erwünscht sind. Im übrigen ist in solchen Ablage-Systemen als nachteilig anzusehen, dass nur die schmalen Seitenflächen der Hüllen der Compact Discs dem Benutzer zugänglich sind, beziehungsweise, dass erst dann, wenn einige der Compact Discs aus den Ausnehmungen entfernt sind, auch die Grund- oder Deckfläche einer oder der anderen Disc sichtbar wird. Zudem ist insbesondere bei Metallgestellen ein Verkratzen der Hüllen nicht zu vermeiden. Nicht unerheblich ist auch die Tatsache, dass für die Aufbewahrung grosser Mengen von Discs ein verhältnismässig grosser Platzbedarf notwendig ist.

Auch sind Ablagesysteme bekannt, bei denen die Compact Discs aus ihren eigentlichen Umhüllungen genommen werden (CH-PS 678 370) und in Art eines Coupon-Ordners-Systems in Kunststofftaschen einbringbar sind. Die einzelnen taschenartigen Fächer mit eingelegten Discs sind dabei wohl blätterbar, um Vor- und/oder Rückseiten der Discs anzuschauen und dabei Informationen über Inhalt zu gewinnen, aber die eigentliche Handhabung als Ordner System ist umständlich und verhindert einen freien Zugang zu einer Vielzahl von Compact Discs. Als zusätzlicher Nachteil solcher Systeme ist die Tatsache anzusehen, dass die sehr illustrativen Hüllen, die den Compact Discs als Verpackung mitgegeben werden, überflüssig werden.

Es sind aber auch sogenannte Rack- oder Stellsysteme bekannt, wo sich die Hüllen der Compact Discs auf eine ihrer schmalen Seitenflächen (meistens die Rückenfläche) in sehr präzise gefertigte Schienen abstellen lassen, wobei der Abstand der die Schienensohle begrenzenden Seitenflächen so gewählt ist, dass sich die Compact Discs Hüllen nach vorne und nach hinten kippen lassen, ohne umzufallen und in nach vorne oder nach hinten gekippter Stellung in dem Rack festzusitzen, d.h. nicht herausnehmbar sind. Nur in senkrechter Stellung lassen sich bei derartigen Systemen die Hüllen der Compact Discs aus der Ablagevorrichtung entfernen. Auch solche Systeme sind zu wenig stabil verankerbar, sodass bei unsorgfälltiger Manipulation einzelne Compact Discs Hüllen aus den Schienen springen und damit das Ablagesystem infrage stellen, weil die Hüllen nicht wenigstens an einer einzigen schmalen Seitenfläche geführt und gefasst sind.

Ein weiteres bekanntes System (Deja-Accesoires, Germany) fasst die Compact Discs Hüllen an deren scharnierförmig ausgebildeten rückwärtigen Seitenfläche (Rückenfläche) in kunststoffgefertigten Führungen, die in einem Stellsystem von unten nach oben nach hinten geneigt sind, sodass die abgelegten Compact Discs auf ihrer rückwärtigen Seitenfläche aufliegen und somit die Schwerkraft gegen ein unbeabsichtigtes Herausfallen der Compact Discs Hüllen aus dem Ablagesystem wirkt.
Die Halterungen dieses Systems sind über Schwenkbolzen so drehbar gelagert, dass über eine Vielzahl von eingestellten Compact Disk Hüllen hinweg geblättert werden kann, um via Illustration auf Grund- und Deckflächen der Hüllen der Compact Discs Information über den aufgezeichneten Inhalt der Discs gewonnen werden kann. Nachteilig bei diesem System ist die wenig stabile Führung der rückwärtigen Seitenfläche, was dazu führt, dass bei Erschütterungen, die Hüllen aus den Führungen gleiten und wieder neu eingeordnet werden müssen.
Ausserdem ist auch bei diesen Systemen verhältnismässig grosser Platzbedarf im Hinblick auf die Anzahl unterzubringender Compact Discs erforderlich und durch die vorgegebene Bauform wenig Flexibilität in bezug auf die Anordnung aufgrund vorgegebener Platzverhältnisse erlaubt.

Es ist daher Aufgabe der vorliegenden Erfindung die vorerwähnten Nachteile der verschiedenen Vorrichtungen zu beseitigen und eine Vorrichtung zur Ablage und/oder Halterung von in ihren Hüllen befindlichen Compact Discs vorzusehen, die eine einfache und stabile, möglichst kindersichere Lagerung vorsieht und zudem eine optimale Betrachtungsmöglichkeit der Deckflächen der Hüllen der Compact Discs zulässt und daneben eine sehr kompakte Bauweise anstrebt. Ferner soll eine unbeschränkte Erweiterbarkeit erreicht werden und eine optimale Anpassung an individuell vorgegebene Platzverhältnisse geschaffen werden.

Die dieser Aufgabe gerecht werdende Vorrichtung ist durch die kennzeichnenden Merkmale des Anspruchs 1 gegeben.

Im folgenden wird die Erfindung anhand zweier in den Zeichnungsfiguren dargestellter Ausführungsbeispiele näher erläutert; es zeigen:
- **Fig. 1**: eine erste Ablage-Vorrichtung mit einigen in Hülle eingelagerten Compact Discs in perspektivischer Darstellung,
- **Fig. 2**: einen Vertikalschnitt durch diese erste Ablage-Vorrichtung und ein entsprechendes Halteelement,
- **Fig. 3**: eine Draufsicht zur ersten Ablage-Vorrichtung, teilweise geschnitten dargestellt,
- **Fig. 4**: **a)** ein weiteres Ausführungsbeispiel einer zweiten Ablage-Vorrichtung in Schnittdarstellung,
**b)** ein Halteelement für die Befestigung der Ablage-Vorrichtung an einer Führungs-Vorrichtung,
**c)** eine Führungs-Vorrichtung zur Halterung einer Ablage-Vorrichtung gemäss **Fig. 4 a),**
**d)** eine Draufsicht der zweiten Ablage-Vorrichtung, teilweise im Schnitt dargestellt.

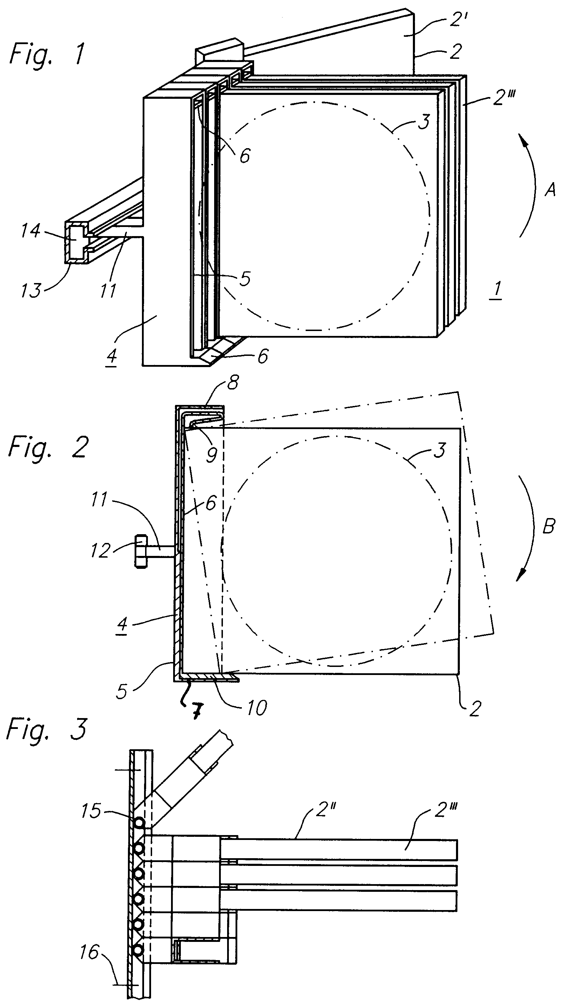

In **Fig. 1** ist eine erste Ablage-Vorrichtung **1** mit teilweise in Hüllen **2** eingelagerten Compact Discs **3** in perspektivischer Darstellung gezeigt. Die karteikastenförmigen Hüllen **2** umschliessen die darin gelagerten Compact Discs **3** und weisen je eine Deckfläche **2'** und eine Boden- oder Grundfläche **2''** und Seitenflächen **2'''**auf. Auf der Deckfläche **2'** und der Boden- oder Grundfläche **2''**sind üblicherweise farbige Illustrationen und Informationen zur eigentlichen Compact Disc, wie beispielsweise Titel, Interpreten, Dauer der Aufzeichnung, etc, angebracht. Diese karteikastenförmigen Hüllen **2** sind mit der hinteren Seitenfläche **2'''**(oder auch mit der vorderen Seitenfläche **2'''**), die üblicherweise ein Scharnier enthält, über welches sich die Hülle zum Herausnehmen der eigentlichen Compact Disc **3** öffnen lässt, in Halteelemente **4** eingesteckt. Diese Halteelemente **4** bestehen aus einem äusseren kastenförmigen Rahmen **5** und einem inneren Einschub **6**. Der innere Einschub **6** besteht aus einem U-förmigen Profil das mit dem Boden **7** des äusseren kastenförmigen Rahmens **5** und mit dem unteren Teil des die Rückwandfläche des das Halteelement bildenden kastenförmigen Rahmens **5** fest verbunden ist. Der obere Teil des U-förmigen Profils hingegen ist im Abstand zur des die Rückwandfläche des Halteelementes bildenden kastenförmigen Rahmens **5** geführt, sodass eine Auslenkung des U-förmigen Profils gegen die Rückenwandfläche möglich ist.

Ebenso verläuft die Deckfläche **8** des kastenförmigen Rahmens **5** im Abstand zu dem sich in der Ruhestellung federnd gegen die obere Seitenfläche **2'''** der Hülle hin abstützenden dachförmigen Teils **9** des U-förmigen Profils, wobei dieser dachförmige Teil **9** vorzugsweise an seinem äusseren Ende eine mäanderförmige Umbiegung (siehe dazu **Fig. 2**) aufweist, gegen die sich die obere Seitenfläche der Hülle federnd abstützt.

Der den Boden **10** des inneren Einschubs **6** bildende Teil des U-förmigen Profils ist im vorliegenden Ausführungsbeispiel mit dem Boden **7** des äusseren kastenförmigen Rahmens **5** zu einem Formteil verbunden und aus Kunststoff gespritzt.

Im weiteren ist die im äusserst hinteren Haltelement **5** eingesteckte Compact Disc Hülle **2** in Richtung des Pfeiles **A** abgedreht, um anzudeuten, dass bei eingesteckten Compact Disc Hüllen **2** in die Halteelemente **5** ein "Blättern" über die einzelnen Compact Disc Hüllen **2** möglich ist.

Die Schwenkbewegung wird über einen mit den Halteelementen **5** verbundenen Schwenkzapfen **11**, der einem zylinderförmigen Bolzen **12** umfasst, realisiert.

Der Schwenkzapfen **11** greift dabei in ein T-förmiges Hohlprofil **13** ein, in dessen eigentlichem Hohlraum **14** der Bolzen **12** vertikal so angeordnet ist, dass sich die Halteelemente **4** verschwenken bzw. im Hohlprofil **13** in Längsrichtung verschieben lassen.

In **Fig. 2** ist ein Vertikalschnitt durch die Vorrichtung bzw. durch ein entsprechendes Halteelement **4** dargestellt. Dabei ist funktionsmässig in gestrichelter Darstellung gezeigt, wie die Hülle **2** einer Compact Disc **3** in die Halteelemente **4** eingesteckt werden kann. Diese wird also in abgewinkelter, an der zu den Halteelementen **4** entfernteren Seite **2'''**angehobenen Stellung, in die Halteelemente eingesteckt und dann durch Drehen in Richtung des Pfeiles **B** in die Ruhestellung gebracht. Dabei wird der federnd auf der oberen Seitenkante **2'''** der Hülle **2** abgestützte dachförmige mäanderförmig geformte Teil **9** des inneren Einschubs **6** in Richtung des die Rückwand bildenden Rahmens **5** beziehungsweise gegen dessen Deckfläche **8** ausgelenkt.

In der Ruhestellung, das heisst bei in das Halteelement **4** eingesetzter Hülle **2** mit entsprechender Compact Disc **3** stützt sich der dachförmige mäanderförmig angeformte Teil des U-förmigen Profils des inneren Einschubs **6** leicht auf die Seitenfläche **2'''** der Hülle **2** ab. Dadurch wird verhindert, dass sich bei Erschütterungen die Haltestellung lockert. Ebenso lässt sich die Hülle **2** nicht durch Ziehen von unten aus dem Halteelement **4** entnehmen, was eine gewisse Kindersicherung darstellt.

In **Fig. 3** ist in einer Draufsicht zur Ablage-Vorrichtung deutlich zu sehen, wie bei der Verschwenkung der Halteelemente, dieselben gegen Anschläge der Schwenkzapfen **11** abdrehbar sind, um zu verhindern, dass die Schwenkzapfen überdreht werden. Zudem sind Befestigungslöcher **16** im Hohlprofil **13** durch entsprechende Mittellinien angedeutet, über welche sich die ganze Ablage-Vorrichtung entweder in Möbeleinrichtungen oder an ortsfeste Wände befestigen lässt.

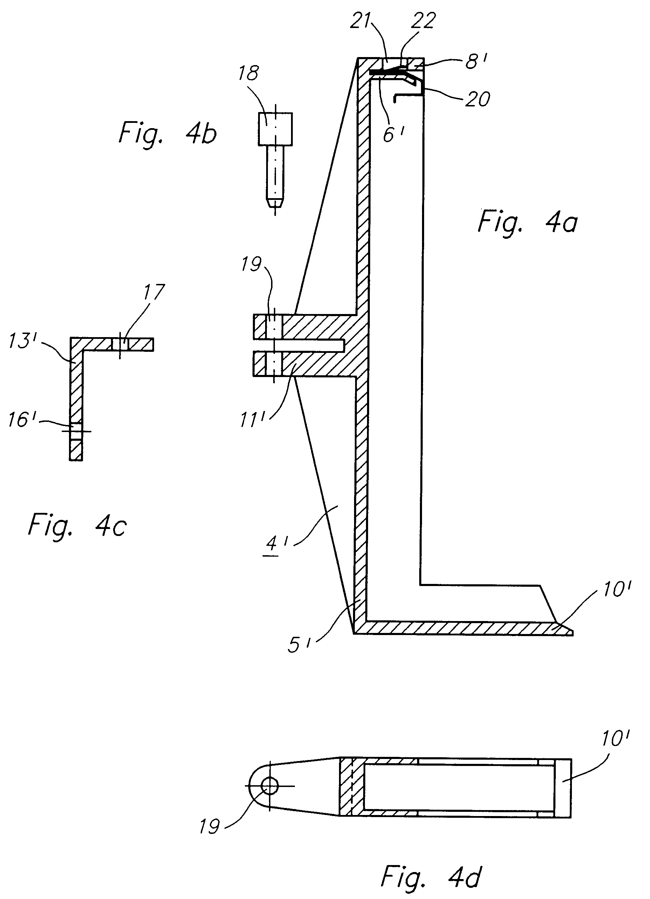

In den **Fig. 4 a), 4 b), 4 c)** und **4 d)** ist ein weiteres Ausführungsbeispiel der Ablage-Vorrichtung gezeigt. (Der Übersichtlichkeithalber werden für gleiche funktionelle Einheiten die gleichen, aber mit einem Strich versehenen Bezugszeichen verwendet.)

Bei diesem Ausführungsbeispiel ist das eigentliche Halteelement **4'** (siehe **Fig. 4 a)**) einteilig ausgeführt. Es entfallen also die Unterteilung des die Rückwand des Halteelementes bildenden Rahmens **5** und des inneren Einschubs **6**. An deren Stelle ist am oberen dachförmigen Teil **8'** des Halteelementes **4'** ein Klemmschuh **6'** ausgebildet, in den sich eine Stahlfeder **20** einsetzen lässt, deren Widerhacken **22** sich in einen vorgesehenen Schlitz **21** einrasten lässt.

Solche Halteelemente **4'** weisen in ihrem Schwenksapfen **11'** eine Haltebohrung **19** auf, in die sich ein Winkelprofil **13'** (siehe **Fig. 4 c)**) einführen und über einen entsprechenden Haltezapfen **18** (siehe **Fig. 4 b)**) schwenkbar lagern lässt. Dadurch, dass die Bodenteile **10'** der Halteelemente **4'** die U-kastenförmige Ausdehnnung des Rahmens **5'** wesentlich überkragen, lässt sich die Einführsicherheit einer abzulegenden Compact Disc Hülle **2** erheblich erhöhen, da eine solche Hülle dann auf das Bodenteil abgestellt wird und sich leicht angeschwenkt in das Halteelement einstecken lässt.

Damit zeigt ein solches Halteelement eine Form, die sich preiswert in Kunststoff Spritzen lässt und mittels handelsüblichen Stahlfedern zu sehr wirkungsvoll einsetzbaren Halteelementen konfektionieren lässt.

Im übrigen lassen sich die Winkelprofile **13'** über Bohrungen **16'** an Wänden oder Schrankflächen befestigen und erlauben somit eine im Prinzip ortsfeste Anordnung von beliebig vielen solcher Halteelemente, die sich aber wiederum bei Bedarf leicht demontieren lassen.

Alle vorerwähnten Massnahmen tragen somit dazu bei eine kompakte und stabile Ablage-Vorrichtung für übersichtlich stapelbare Compact Disks herzustellen.

## Patentansprüche

1. Vorrichtung zur Ablage und/oder Halterung von in Hüllen (**2**) befindlichen Compact Discs (**3**) und dergleichen,
**dadurch gekennzeichnet**, **dass**
zum Erfassen des Scharnierbereiches oder dessen Gegenseite der Hüllen (**2**) der Compact Discs (**3**) vertikal angeordnete Halteelemente (**4, 4'**) vorgesehen sind, und wobei sich im oberen Bereich der Halteelemente (**4, 4'**) Mittel vorgesehen sind, die erlauben, dass sich die Seitenfläche (**2'''**) der Hüllen (**2**) der Compact Discs (**3**) wenigstens teilweise federnd gegen den dachförmigen Teil (**9**) des Innern der Halteelemente (**4, 4'**) abstützt.

2. Vorrichtung nach Patentanspruch **1**,
**dadurch gekennzeichnet**, **dass**
die Halteelemente (**4**) einen inneren U-förmigen Einschub (**6**) und einen diesen umfassenden äusseren kastenförmigen Rahmen (**5**) aufweisen, und dass im unteren Bereich der Halteelemente (**4**) der innere Einschub (**6**) und der äussere kastenförmige Rahmen (**5**) fest miteinander verbunden sind und im oberen Bereich der Halteelemente (**4**) der innere Einschub (**6**) einen vorbestimmten Abstand zum äusseren kastenförmigen Rahmen (**5**) aufweist und sich im dachförmigen Bereich (**9**) in mäanderförmiger Art gegen die Seitenfläche (**2'''**) der Hüllen (**2**) der Compact Discs (**3**) abstützbar ist.

3. Vorrichtung nach Patentanspruch **2**,
**dadurch gekennzeichnet**, **dass**
die Halteelemente (**4**) mit einem Schwenkzapfen (**11**) versehen sind, der in einer vertikal angeordneten Führung (**13**) längsverschiebbar ist.

4. Vorrichtung nach Patentanspruch **3**,
**dadurch gekennzeichnet**, **dass**
die Führung (**13**) aus einem halbierten T-förmigen Hohlprofil (**14**) besteht und der Schwenkzapfen (**11**) mit Anschlagmitteln (**15**) versehen ist.

5. Vorrichtung nach Patentanspruch **2** oder **3**,
**dadurch gekennzeichnet**, **dass**
die Führung (**13**) Mittel zur ortsfesten Befestigung (**16**) aufweist.

6. Vorrichtung nach Patentanspruch **2**,
**dadurch gekennzeichnet**, **dass**
der innere U-förmige Einschub (**6**) und der äussere kastenförmige Rahmen (**5**) im wesentlichen einteilig ausgebidet sind und im oberen Bereich der Halteelemente (**4'**) ein Klemmschuh (**6'**) für die Aufnahme einer Federelementes (**20**) vorgesehen ist.

7. Vorrichtung nach Patentanspruch **6**,
**dadurch gekennzeichnet**, **dass**
eine Führung (**13'**) in Form eines Winkelprofils vorgesehen ist, und in die sich die Halteelemente (**4'**) mittels eines Haltezapfens (**18**) drehbar einsetzen lässt.

8. Vorrichtung nach Patentanspruch **6** oder **7**,
**dadurch gekennzeichnet**, **dass**
die Boden (**10'**) des Halteelementes eine wesentlich weitere Ausdehnung in Richtung Längsausdehnung der Hülle (**2**) aufweist, als der entsprechende kastenförmige Rahmen (**5**).

9. Vorrichtung nach einem der vorangehenden Patentansprüche,
**dadurch gekennzeichnet**, **dass**
die Halteelemente (**4, 4'**) aus Kunststoff hergestellt sind.
